# EUROPEAN PATENT SPECIFICATION

(11) **EP 3 118 416 B1**
(45) Date of publication and mention of the grant of the patent: **30.01.2019**
(21) Application number: 16176850.2
(22) Date of filing: 29.06.2016
(51) Int. Cl.: F01D 9/04, F02K 3/06

(54) **A GAS TURBINE ENGINE**
GASTURBINENMOTOR
MOTEUR À TURBINE À GAZ

(30) Priority: 17.07.2015 GB 201512516
(43) Date of publication of application: 18.01.2017
(73) Proprietor: Rolls-Royce plc, London SW1E 6AT (GB)
(72) Inventor: Parry, Anthony, Derby, Derbyshire DE24 8BJ (GB)
(74) Representative: Rolls-Royce plc

(56) References cited:
- EP-A2- 1 936 120
- US-A1- 2010 232 954
- US-A1- 2013 209 228
- US-A1- 2015 143 810

## Description

The disclosure relates to a gas turbine engine comprising a support that extends across a bypass duct and acts as a source region, with a sink region located so as to at least partly compensate for aerodynamic effects caused by the source region.

Gas turbine engines typically comprise a main gas generator section supported within an outer casing by a plurality of circumferentially spaced and radially extending supports known as pylons or struts. An annular bypass duct is defined between the outer casing and the main gas generator section. A series of circumferentially spaced outlet guide vanes are located within the bypass duct upstream of and close to the pylons to guide air through the bypass duct in a substantially axial direction.

US2010/0232954 relates to a providing an enlarged flow cross-section in the bypass duct in the axial and circumferential direction, the enlarged flow cross-section being confined to an area around a leading edge of support struts and/or an aerodynamic fairing.

In use, a propulsive fan located upstream of the outlet guide vanes rotates about the longitudinal axis of the gas turbine engine so as to accelerate air through the bypass duct. The air in the bypass duct is forced around the pylons which causes a nonuniform pressure distribution around the annular bypass duct. This results in non-axisymmetric loading on the outlet guide vanes and fan. It may also result in losses in the system resulting in reduced efficiency.

It is therefore desirable to provide an improved gas turbine engine comprising a support radially extending across a bypass duct.

In a broadly there is provided a duct defined between a first wall and a second wall with a support extending across the duct between the first and second walls, wherein a region or feature is provided adjacent to and upstream from the upstream end of the support to at least partly compensate for aerodynamic effects caused by the support.

According to an aspect there is provided a gas turbine engine according to claim 1.

The term "source region" is used to mean a region which forces air to flow away from it. The "source region" may therefore be modelled in fluid dynamics by one or more sources (e.g. a line source or a point source). For example, the upstream end of the support acts as a source region as fluid approaching it in the bypass duct is forced away from it and flows around it. The term "sink region" is used to mean a region which draws air towards it. The "sink region" may therefore be modelled in fluid dynamics by one or more sinks (e.g. a line sink or a point sink). The sink region may be a recess or an inlet to a fluid channel or the like and therefore fluid in the bypass duct is drawn towards it. The sink region may be any region, feature or structure, for example, that causes air to be drawn towards it.

The sink region compensates for the source region so as to reduce non-axisymmetric loading on the fan and outlet guide vanes that would otherwise be caused by the support. For example, the sink region may be a recessed volume having a volume comparable to that of the support such that air in the bypass duct which is forced around and away from the support flows into the recessed volume.

The pylon of claim 1 may be referred to as a support. The support may support or structurally maintain the inner wall, such as an inner casing, within the outer wall, such as an outer casing. The support may support or structurally maintain a main gas generator section within an outer casing or nacelle. The radially inner wall may be defined by the main gas generator section. The radially outer wall may be defined by the nacelle or outer casing.

The sink region may be circumferentially aligned with the source region. The sink region may be at least partly defined by one or more features provided in the inner wall and/or one or more features provided in the outer wall.

The recessed sections may be axially and circumferentially aligned with one another. The recessed sections may define a volume that is substantially equal to or comparable to the volume of the support. The support may be at least partly located within the or each recessed section. For example, if there are two recessed sections the radially outer end of the support may be located in the recessed section of the outer wall and the radially inner end of the support may be located in the recessed section of the inner wall.

A downstream portion of the or each recessed section may act as source.

The gas turbine engine may further comprise at least one auxiliary fluid passageway having an inlet adjacent to and upstream from the upstream end of the support. Air within the bypass duct may enter the passageway through the inlet. The inlet may form at least a part of the sink region. The inlet may draw air in the bypass duct through the bypass duct and away from a region adjacent to and upstream of the support.

The inlet may be provided in the inner wall or the outer wall. The auxiliary fluid passageway may have an outlet. Air may exit the outlet, and, as such, the outlet may act as a source. The outlet may open into the bypass duct. The outlet may be provided in the inner wall or the outer wall. The outlet may be downstream of the inlet. The outlet may be downstream of the upstream end of the support. The outlet may be downstream of the downstream end of the support.

The outlet may be circumferentially spaced from source. The outlet may act to equalise the pressure of circumferentially distributed pressure regions within the bypass duct. The outlet may be circumferentially aligned with the source region. The outlet may open into the atmosphere.

The gas turbine engine may further comprise a plurality of circumferentially spaced outlet guide vanes located in the bypass duct upstream of the support, and a fan located upstream of the outlet guide vanes.

There may be a plurality of circumferentially spaced supports, the upstream end of each support acting as a source region, and wherein a sink region is provided adjacent to and upstream from each source region. The supports may be equally spaced in the circumferential direction.

The disclosure also relates to an aircraft comprising a gas turbine engine in accordance with any statement herein.

Arrangements will now be described, by way of example, with reference to the accompanying drawings, in which:
Figure 1 schematically shows a gas turbine engine;
Figure 2 schematically shows a close-up cross-sectional view of the gas turbine engine of Figure 1;
Figure 3 schematically shows a cross-sectional view along the line A-A of Figure 2;
Figure 4 schematically shows a cross-sectional view along the line B-B of Figure 2; and
Figure 5 schematically shows an alternative arrangement to that shown in Figure 2.

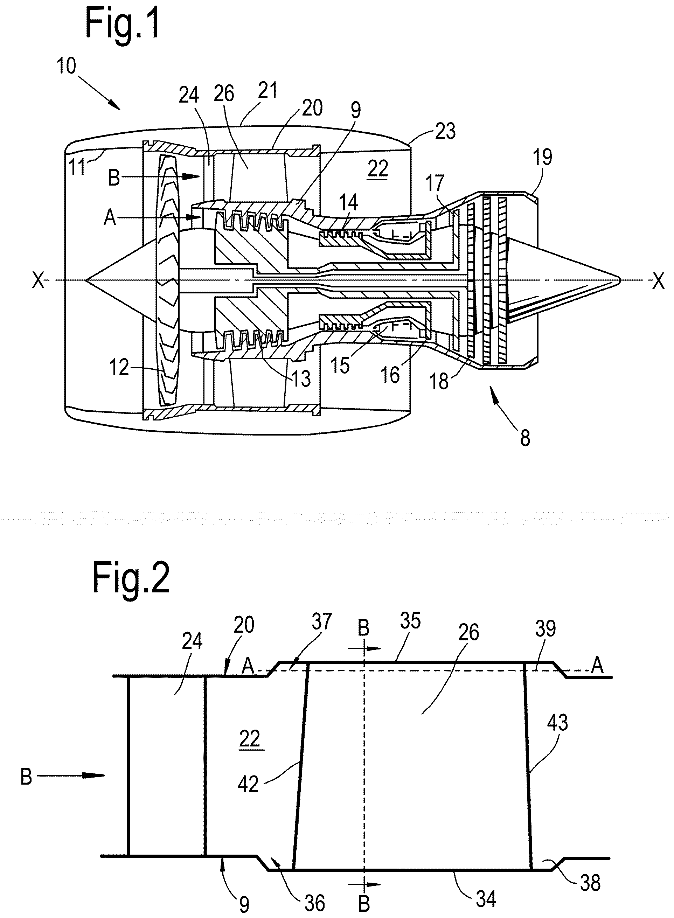

**Figure 1** shows a ducted fan gas turbine engine 10 having a principal and rotational axis X-X. The gas turbine engine 10 has a main gas generator section 8 comprising, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

A plurality of circumferentially arranged outlet guide vanes 24 are located within an upstream section of the bypass duct 22 adjacent to and downstream from the fan 12. A plurality of circumferentially arranged supports, known as pylons 26, are provided which support the main gas generator section 8 within the nacelle 21. The pylons 26 are downstream from and adjacent to the guide vanes 24. Each pylon 26 is attached to and extends between a wall 20 of the nacelle 21 (referred to as a radially outer wall) and a wall 9 of the main gas generator section 8 (referred to as a radially inner wall). The spacing between the radially inner and outer walls 9, 20 defines the bypass duct 22. The pylons 26 are downstream of and adjacent to the outlet guide vanes 26.

During operation, air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

The second air flow B flows past the guide vanes 24 which act to cause the second air flow B to flow in a generally axial direction. As the second air flow B approaches the pylons 26 in the bypass duct 22 the air is forced to flow around the pylons 26 and therefore the direction of the air changes. The upstream front ends of the pylons 26 cause air to flow away from them, and are therefore referred to a "source regions". As will be described in detail below, to minimise the impact of these source regions on the outlet guide vanes 24 and fan 12, each source region (i.e. the upstream end of each pylon 26) is provided with a corresponding sink region. The sink regions cause air to flow towards them, and therefore act to compensate for aerodynamic effects caused by the source regions.

**Figures 2-4** show close-up views of the bypass duct 22 in the region of an outlet guide vane 24 and a downstream pylon 26. As stated above, the upstream front end 42 of each pylon 26 acts as a source region. In this embodiment, a first recessed wall section 34 is provided in the radially inner wall 9 and a second recessed wall section 35 is provided in the radially outer wall 20. There are therefore a plurality of circumferentially arranged first recessed wall sections 34 in the inner wall 9 (one for each pylon 26) and a plurality of second recessed wall sections 35 in the outer wall 20 (one for each pylon 26). Front (or upstream) ends 36, 37 of the recessed sections 34, 35 act as a sink region to at least partly compensate for aerodynamic effects caused by the front end 42 of the pylon 26 which acts as source region. The front ends 36, 37 are located adjacent to and upstream from the source region formed by the front end 42 of the pylon 26. Conversely, rear (or downstream) ends 38, 39 of the recessed sections 34, 35 act as a source region as the air flows away from them as it is forced out of the recessed sections 34, 35. This source region is adjacent to and downstream from the rear downstream end 43 of the pylon 26 which acts as a sink region. It should be appreciated that in other arrangements each pylon 26 may have only a single associated recessed wall section 34, 35. The single associated recessed section 34, 35 could be a first recessed wall section 34 in the inner wall 9, or a second recessed wall section 25 in an outer wall 20.

The front ends 36, 37 of the recessed sections 34, 35 each comprise a wall that is angled with respect to an upstream portion of the inner wall 9 and outer wall 20 respectively (i.e. it has a different gradient). Specifically, the front ends 36 of the first recessed wall sections 34 extend radially inwards (in the direction of flow), whereas the upstream portion of the inner wall 9 extends axially. Similarly, the front ends 37 of the second recessed wall sections 35 extend radially outwards (in the direction of flow), whereas the upstream portion of the outer wall 20 extends axially. This change in gradient causes air to be drawn into the recessed sections 34, 35. The front ends 36, 37 of the recessed sections 34, 35 are also angled with respect to a downstream portion of the inner wall 9 and outer wall 20 respectively formed by a base of the recessed section 34, 35.

The rear ends 38, 39 of the recessed sections 34, 35 also each comprise a wall that is angled with respect to an upstream portion of the inner or outer wall 9, 20 (i.e. it has a different gradient). Specifically, the rear ends 38 of the first recessed wall sections 34 extend radially outwards (in the direction of flow), whereas the upstream portion of the inner wall 9 (along the base of the first recessed wall section 34) extends axially. Similarly, the rear ends 39 of the second recessed wall sections 35 extend radially inwards (in the direction of flow), whereas the upstream portion of the outer wall 20 (along the base of the second recessed wall section 35) extends axially. These changes in gradient at the front and rear ends 36-39 cause air to be drawn into and forced away from the recessed sections 34, 35 to form the sink and source regions. The rear ends 38, 39 of the recessed sections 34, 35 are also angled with respect to a downstream portion of the inner wall 9 and outer wall 20 respectively.

The first recessed wall section 34 is a part of the inner wall 9 that is offset radially inwardly with respect to the remainder of the inner wall 9. It may therefore be referred to as a "dimple" in the inner wall 9. Similarly, the second recessed wall section 35 is a part of the outer wall 20 that is offset radially outwardly with respect to the remainder of the outer wall 20. It may therefore be referred to as a "dimple" in the outer wall 20. In this arrangement the shape of the first recessed wall section 34 is similar to that of the second recessed wall section 35. However, in other arrangements the shapes may be different.

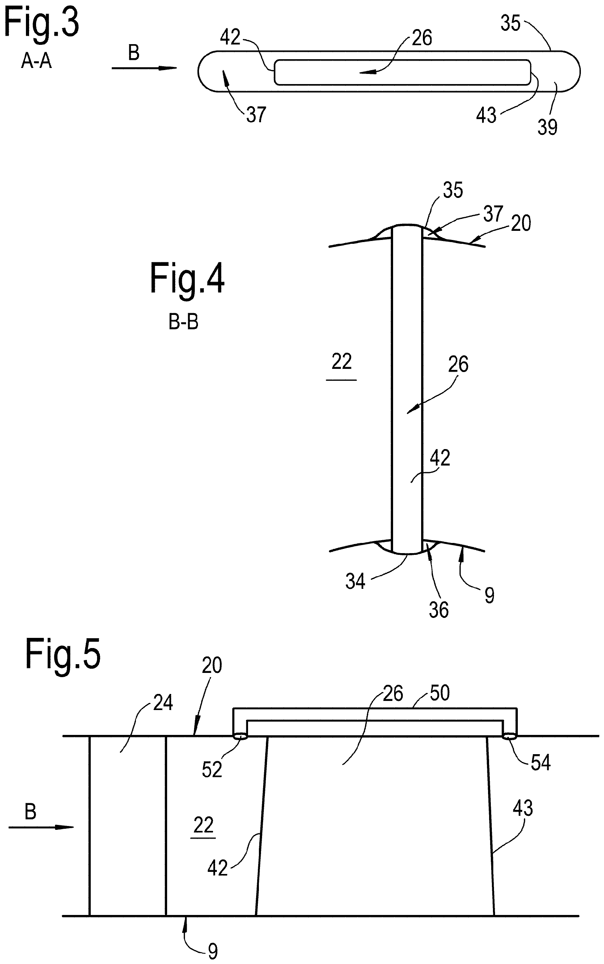

As best shown in Figures 2 and 3, the first and second recessed wall sections 34, 35 define recesses that have an axial extent greater than that of the pylon 26, and a circumferential extent greater than that of the pylon 26. In other words, the recessed sections 34, 35 are longer and wider than the pylon 26. The recessed wall sections 34, 35 are circumferentially aligned with one another and with the corresponding pylon 26. As best shown in Figures 2 and 4, the radially inner end of the pylon 26 is located within the recess formed by the first recessed wall section 34 and is attached to the inner wall 9. Similarly, the radially outer end of the pylon 26 is located within the recess formed by the second recessed wall section 35 and is attached to the outer wall 20. Thus, the recessed wall sections 34, 35 extend axially from a position upstream of the front end 42 of the pylon 26 to a position downstream of the downstream end of the pylon 26. Further, the recessed wall sections 34, 35 circumferentially extend from one side to the opposing side of the pylon 26.

In use, the second air flow B generated by the propulsive fan 12 enters the bypass duct 22 and passes through the guide vanes 24. The guide vanes 24 act to direct the air in an axial direction through the bypass duct 22. The front end 42 of the pylon 26 acts as a source region and therefore the air is forced or directed tangentially away from the pylon 26 (i.e. it has to flow around the pylon 26). This creates a localised pressure increase that would ordinarily have an impact on the guide vanes 24 and the fan 12. However, the upstream (front) sections 36, 37 of the recessed sections 34, 35 act as sink regions and therefore the air flow is directed or drawn towards them. Specifically, since the walls of the front ends 36, 37 are angled with respect to the upstream portion of the inner wall 9 and outer wall 20 respectively, air is directed or drawn towards the front ends 36, 37 in a radial direction. Air is also drawn into the front ends 36, 37 in a circumferential direction. This creates a localised pressure reduction which at least partly cancels out the localised pressure increase caused by the pylon 26. The sink region therefore at least partly compensates for the source region and therefore the upstream effect on the guide vanes 24 and fan 12 is reduced.

The air travels past the pylon 26 within the volume created by the recessed sections 34, 35. The base of the recessed sections 34, 35 disposed between the upstream ends 36, 37 and the downstream ends 38, 39 is substantially axially aligned (and thus aligned with the upstream and downstream portions of the inner and outer walls 9, 20 outside of the recessed sections 34, 35) and has a substantially constant width. As such, the base of the recessed sections 34, 35 does not significantly redirect flow and thus does not act as either a source region or a sink region. Likewise, the walls of the pylon 26 disposed between the upstream end 42 and the downstream end 43 are substantially aligned with the direction of fluid flow such that the pylon 26 has a substantially constant cross-section over this portion. As such, the portion of the pylon 26 disposed between the upstream end 42 and the downstream end 43 does not substantially redirect flow and thus does not act as either a source region or a sink region. However, as the air reaches the end of the recessed sections 34, 35 and the downstream end of the pylon 26, the downstream ends 38, 39 of the recessed sections act as source regions which force the air away from them and the downstream end 43 of the pylon 26 acts as a sink region. The air then continues to flow substantially axially within the bypass duct.

Although it has been described that the recessed sections have a downstream end positioned downstream of the rear end 43 of the pylon 26, in other arrangements the recessed sections could be shorter and therefore may terminate at a position between the front and rear ends of the pylon 26. Further, as opposed to there being two recessed sections per pylon 26, there may only be a single recessed section provided by either the outer wall or the inner wall.

It has been described that the sink region adjacent to the source region formed by the upstream front end 42 of the pylon 26 is created by two recessed sections in the inner and outer walls 9, 20. However, the sink region could be formed in an alternative way, as long as it draws air towards it.

**Figure 5** shows an alternative arrangement to that shown in Figure 2-4. However, there are no recessed wall sections. Instead, each pylon 26 is provided with an auxiliary fluid passageway 50 having an inlet 52 and an outlet 54 in the outer wall 20. In this arrangement, the inlet 52 opens into the bypass duct 22 at a position adjacent to and upstream from the front end 42 of the pylon 26. The outlet 54 opens into the bypass duct 22 at a position downstream from the rear end 43 of the pylon 26. The inlet 52 and the outlet 54 are both circumferentially aligned with the pylon 26. As will be explained below the inlet 52 acts as a sink region and the outlet acts as a source region.

In use, the second air flow B generated by the propulsive fan 12 enters the bypass duct 22 and passes through the guide vanes 24. The guide vanes 24 act to direct the air in an axial direction through the bypass duct 22. The front end 42 of the pylon 26 acts as a source region and therefore the air is forced or directed away from the pylon 26 (i.e. it has to flow around the pylon 26). This creates a localised pressure increase that would ordinarily have an impact on the guide vanes 24 and the fan 12. However, the inlet 52 acts as a sink region and therefore the air flow is drawn towards it. Thus, a stream of air is drawn into the auxiliary fluid passageway 50 which creates a localised pressure reduction which at least partly cancels out the localised pressure increase caused by the pylon 26. As for the arrangement described with reference to Figures 2-4, the sink region at least partly compensates for the source region and therefore the upstream effect on the guide vanes 24 and fan 12 is reduced. The auxiliary fluid passageway 50 can be regarded as providing an extra fluid passageway through which air may pass that, had a pylon 26 not been present, would have been able to pass through the volume occupied by the support 26. The air flow within the fluid passageway 50 exist through the outlet 54 which is downstream of the rear end 43 of the pylon 26. The outlet therefore acts as a source region.

It has been described that the auxiliary passageway 50 is axially extending and aligned with the pylon 26. However, in other arrangements the outlet 54 of the passageway 50 may be circumferentially offset from the pylon 26. The inlet 52 may be circumferentially offset from the pylon 26. Further, in other arrangements the outlet 54 may open into the bypass duct 22 at a position in between the front and rear ends 42, 43 of the pylon. The inlet and outlet could be formed in the inner wall 9 as opposed to the outer wall 20. Further, each pylon 26 could have multiple fluid passageways associated with it. For example, there could be two passageways, one having an inlet and outlet in the outer wall 20, the other having an inlet and outlet in the inner wall. As opposed to opening into the bypass duct 22, in other arrangements the outlet may open into the atmosphere.

Although the walls of the front ends 36, 37 and the rear ends 38, 39 have been described as being angled radially inwardly or outwardly, it will be appreciated that it is the change in gradient with respect to the upstream and/or downstream which is important to create the sink or source region. In particular, the portions of the inner and outer walls 9, 20 upstream and downstream of the recessed sections 34, 35 and the base of the recessed sections 34, 35 may themselves extend radially outwardly or inwardly.

It should be appreciated that the sink region adjacent to the front end 42 of the pylon 26 could be provided by a combination of one or more recessed wall sections and one or more inlets to auxiliary fluid passageways (i.e. a combination of the arrangements shown in Figures 2 and 5). Further, a sink region could be formed in any other suitable way as long as it causes air to be drawn towards it.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine (10) comprising:
an annular bypass duct (22) defined between a radially inner wall and a radially outer wall; and
a pylon (26) radially extending across the bypass duct and attached at a radially outer end to the outer wall and at a radially inner end to the inner wall, the upstream end of the pylon acting as a source region;
wherein the inner wall and/or the outer wall each comprise a recessed section (34, 35), and **characterised in that** each recessed section extends from an axial position upstream of the upstream end (42) of the pylon to an axial position downstream of the downstream end (43) of the pylon.

2. A gas turbine engine according to claim 1, wherein the or each recessed section has a circumferential extent greater than that of the pylon and extends from one side to the opposing side of the pylon.

3. A gas turbine engine according to claim 1 or 2, further comprising at least one auxiliary fluid passageway (50) having an inlet (52) adjacent to and upstream from the upstream end of the pylon, wherein the inlet forms at least a part of a sink region.

4. A gas turbine engine according to claim 3, wherein the inlet is provided in the inner wall or the outer wall.

5. A gas turbine engine according to claim 3 or 4, wherein the auxiliary fluid passageway has an outlet (54) that opens into the bypass duct.

6. A gas turbine engine according to any of claims 3 to 5, wherein the outlet is downstream of the inlet.

7. A gas turbine engine according to any of claims 3 to 6, wherein the outlet is downstream of the upstream end of the pylon.

8. A gas turbine engine according to any of claims 3 to 7, wherein the outlet is downstream of the downstream end of the pylon.

9. A gas turbine engine according to any of claims 3 to 8, wherein the outlet is circumferentially spaced from or circumferentially aligned with a source region.

10. A gas turbine engine according to any preceding claim, further comprising a plurality of circumferentially spaced outlet guide vanes located in the bypass duct upstream of the pylon, and a fan located upstream of the outlet guide vanes.

## Patentansprüche

1. Gasturbinenmotor (10), umfassend:
eine ringförmige Umgehungsleitung (22), die zwischen einer radial inneren Wand und einer radial äußeren Wand definiert ist;
und einen Pylonen (26), der sich radial über die Umgehungsleitung erstreckt und an einem radial äußeren Ende an die äußere Wand und an einem radial inneren Ende an die innere Wand befestigt ist, wobei das stromaufwärtige Ende des Pylonen als eine Quellregion fungiert;
wobei die innere Wand und/oder die äußere Wand jeweils einen ausgenommenen Abschnitt (34, 35) umfassen, und **dadurch gekennzeichnet, dass** sich jeder ausgenommene Abschnitt von einer axialen Position stromaufwärts vom stromaufwärtigen Ende (42) des Pylonen zu einer axialen Position stromabwärts vom stromabwärtigen Ende (43) des Pylonen erstreckt.

2. Gasturbinenmotor nach Anspruch 1, wobei der oder jeder ausgenommene Abschnitt ein Umfangsausmaß aufweist, das größer als das des Pylonen ist und sich von einer Seite zur gegenüberliegenden Seite des Pylonen erstreckt.

3. Gasturbinenmotor nach Anspruch 1 oder 2, ferner umfassend mindestens einen Fluidhilfskanal (50) mit einem Einlass (52) angrenzend an und stromaufwärtig vom stromaufwärtigen Ende des Pylonen, wobei der Einlass mindestens einen Teil einer Senkregion bildet.

4. Gasturbinenmotor nach Anspruch 3, wobei der Einlass in der inneren Wand oder der äußeren Wand bereitgestellt ist.

5. Gasturbinenmotor nach Anspruch 3 oder 4, wobei der Fluidhilfskanal einen Auslass (54) aufweist, der sich in die Umgehungsleitung öffnet.

6. Gasturbinenmotor nach einem der Ansprüche 3 bis 5, wobei der Auslass stromabwärts vom Einlass ist.

7. Gasturbinenmotor nach einem der Ansprüche 3 bis 6, wobei der Auslass stromabwärts des stromaufwärtigen Endes des Pylonen ist.

8. Gasturbinenmotor nach einem der Ansprüche 3 bis 7, wobei der Auslass stromabwärts vom stromabwärtigen Ende des Pylonen ist.

9. Gasturbinenmotor nach einem der Ansprüche 3 bis 8, wobei der Auslass in Umfangsrichtung von einer Quellregion beabstandet oder in Umfangsrichtung auf eine Quellregion ausgerichtet ist.

10. Gasturbinenmotor nach einem der vorstehenden Ansprüche, ferner umfassend eine Vielzahl von in Umfangsrichtung beabstandeten Auslassführungsblättern, die sich in der Umgehungsleitung stromaufwärts vom Pylonen befinden, und ein Gebläse, das sich stromaufwärts von den Auslassführungsblättern befindet.

## Revendications

1. Moteur à turbine à gaz (10) comprenant :
un conduit de dérivation annulaire (22) défini entre une paroi radialement interne et une paroi radialement externe ;
et un pylône (26) s'étendant radialement à travers le conduit de dérivation et fixé au niveau d'une extrémité radialement externe à la paroi externe et au niveau d'une extrémité radialement interne à la paroi interne, l'extrémité amont du pylône agissant en tant que zone de source ;
ladite paroi interne et/ou ladite paroi externe comprenant chacune une section évidée (34, 35) et **caractérisé en ce que** chaque section évidée s'étend à partir d'une position axiale en amont de l'extrémité amont (42) du pylône jusqu'à une position axiale en aval de l'extrémité aval (43) du pylône.

2. Moteur à turbine à gaz selon la revendication 1, ladite ou chacune desdites sections évidées possédant une étendue circonférentielle supérieure à celle du pylône et s'étendant à partir d'un côté jusqu'au côté opposé du pylône.

3. Moteur à turbine à gaz selon la revendication 1 ou 2, comprenant en outre au moins un passage de fluide auxiliaire (50) possédant une entrée (52) adjacente à l'extrémité en amont du pylône et en amont de celle-ci, ladite entrée formant au moins une partie d'une zone de puits.

4. Moteur à turbine à gaz selon la revendication 3, ladite entrée étant disposée dans la paroi interne ou la paroi externe.

5. Moteur à turbine à gaz selon la revendication 3 ou 4, ledit passage de fluide auxiliaire possédant une sortie (54) qui s'ouvre dans le conduit de dérivation.

6. Moteur à turbine à gaz selon l'une quelconque des revendications 3 à 5, ladite sortie étant en aval de l'entrée.

7. Moteur à turbine à gaz selon l'une quelconque des revendications 3 à 6, ladite sortie étant en aval de l'extrémité amont du pylône.

8. Moteur à turbine à gaz selon l'une quelconque des revendications 3 à 7, ladite sortie étant en aval de l'extrémité aval du pylône.

9. Moteur à turbine à gaz selon l'une quelconque des revendications 3 à 8, ladite sortie étant espacée circonférentiellement d'un zone de source ou étant alignée circonférentiellement avec celle-ci.

10. Moteur à turbine à gaz selon l'une quelconque des revendications précédentes, comprenant en outre une pluralité d'aubes directrices de sortie espacées circonférentiellement situées dans le conduit de dérivation en amont du pylône et une soufflante située en amont des aubes directrices de sortie.
